(19) Europäisches Patentamt
European Patent Office
Office européen des brevets

(11) EP 3 852 913 B1

(12) **EUROPEAN PATENT SPECIFICATION**

(45) Date of publication and mention of the grant of the patent:
**19.10.2022 Bulletin 2022/42**

(21) Application number: **19758783.5**

(22) Date of filing: **29.08.2019**

(51) International Patent Classification (IPC):
***C09D 133/12*** *(2006.01)* ***C08G 18/64*** *(2006.01)*
***C08G 18/76*** *(2006.01)* ***C08G 18/79*** *(2006.01)*
***C08G 18/28*** *(2006.01)* ***C08G 65/26*** *(2006.01)*
***C08G 18/42*** *(2006.01)*

(52) Cooperative Patent Classification (CPC):
(C-Sets available)
**C08G 18/6423; C08G 18/2815; C08G 18/283; C08G 18/2865; C08G 18/4244; C08G 18/7621; C08G 18/798; C08G 65/2609; C08G 65/2615;**
C08G 2650/24 (Cont.)

(86) International application number:
**PCT/EP2019/073125**

(87) International publication number:
**WO 2020/057933 (26.03.2020 Gazette 2020/13)**

(54) **AN AMINE FUNCTIONAL COMPOUND HAVING A URETHANE GROUP**
AMINFUNKTIONALE VERBINDUNG MIT URETHANGRUPPE
COMPOSÉ FONCTIONNEL D’AMINE AYANT UN GROUPE URÉTHANE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.09.2018 EP 18195271**

(43) Date of publication of application:
**28.07.2021 Bulletin 2021/30**

(73) Proprietor: **BYK-Chemie GmbH**
**46483 Wesel (DE)**

(72) Inventors:
- **JAUNKY, Guillaume, Wojciech**
**46483 Wesel (DE)**
- **OKKEL, Andreas**
**46483 Wesel (DE)**
- **GIEBELHAUS, Irina**
**46483 Wesel (DE)**
- **LORENZ, Markus**
**46483 Wesel (DE)**
- **TEUWSEN, Hans-Josef**
**46483 Wesel (DE)**
- **BÖMER, Jörg**
**46483 Wesel (DE)**
- **VOGEL, Anne**
**46483 Wesel (DE)**

(74) Representative: **Altana IP Department**
**Altana Management Services GmbH**
**Abelstraße 45**
**46483 Wesel (DE)**

(56) References cited:
**EP-A1- 1 916 273**
**US-A- 3 682 865**
**US-A1- 2017 190 840**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C09D 133/12, C08L 75/00**

## Description

### FIELD OF THE INVENTION

The invention relates to an amine functional compound, to the uses of the amine functional compound, to a composition comprising the amine functional compound and to a method for the production thereof.

### BACKGROUND OF THE INVENTION

Wetting agents which are present in a liquid in dissolved or dispersed form, reduce the surface tension or the interfacial tension, and thus increase the wetting capacity of the liquid. In this way, wetting agents permit a surface to be readily wetted by a liquid.

Dispersants are suitable in general for stabilizing solid particles in binders, paints, coatings, pigment pastes, plastics and plastic blends, adhesives and sealing compounds, for reducing the viscosity of corresponding systems and for improving the flow properties.

High mechanical forces are necessary in order to be able to introduce solids into liquid media. It is customary to use dispersants to reduce the dispersing forces and to minimize the total energy input into the system, which is required for deflocculation of solid particles and thus also to minimize the dispersing time. Dispersants of this kind are surface-active substances of anionic, cationic and/or neutral structure. These substances, in a small amount, are either applied directly to the solid or are added to the dispersing medium. It is also known that, following complete deflocculation of the agglomerated solids into primary particles, after the dispersing operation, there are also instances of reagglomeration, thereby completely or partly nullifying the dispersing effort.

As a result of inadequate dispersion and/or reagglomeration, unwanted effects typically occur, such as color drift, an increase in viscosity in liquid systems and a loss of gloss in paints and coatings as well as a reduction in the mechanical strength and material homogeneity in plastics.

In practice, various types of compounds maybe considered for use as wetting agents and / or dispersants. This is due in particular to the fact that there exist a number of different types of systems, which are based in particular on a wide variety of binders with different particles to be dispersed, such as pigments, fillers and fibers. In connection with the dispersion of pigments and fillers dispersants may contain tertiary amine groups or derivatives thereof as functional groups to provide cationic functional dispersants.

US2017/0190840 describes polyamine addition compounds, methods for the production thereof, the use thereof as wetting agents and dispersing agents, and paints and plastic materials containing said addition compounds.

In view of the multiplicity of organic or inorganic pigments that are nowadays used, sufficient stabilization is not sufficiently ensured and therefore there is still a need to further improve the performance of the dispersant. In particular, dispersants comprising a polyester segment may suffer from a tendency to crystallization at low temperature, for example at 10 °C or lower. In particular, a polycaprolactone segment has a strong tendency to crystallization at low temperature. The dispersing ability of the dispersant may be negatively influenced due to the crystallization of the dispersant and the resulting dispersion may be prone to inadequate dispersion and/or reagglomeration. This may cause a color shift, a loss of gloss and/or an increase in viscosity of the dispersing system. Additionally, the handling, such as a dosing, of the dispersant itself may also be negatively influenced by a crystallization of the dispersant.

It is an object of the present invention, therefore, to eliminate the above-described disadvantages of known state of the art dispersants, in other words to develop dispersants that provide an effective stabilization of particles and in particular for dispersing pigments.

### SUMMARY OF THE INVENTION

In a first aspect the invention provides an amine functional compound comprising

i. at least one segment consisting of at least one ether unit and at least one ester unit, wherein the ether units and ester units are connected by an ether link or by an ester link, and wherein the sum of the number of ether units and ester units is at least three, and wherein the ether units and ester units are arranged in random order, and
ii. at least one amine group ii. selected from a tertiary amine group, a salt of a tertiary amine group and a quaternary ammonium group,

and wherein each segment i. is covalently linked to the at least one amine group ii. via a linkage comprising a urethane group and another group selected from a urethane group, a urea group, a biuret group and an allophanate group.

In a further aspect, the invention provides an amine functional compound comprising:

i. at least one segment consisting of at least one ether unit and at least one ester unit, wherein the ether units and ester units are connected by an ether link or an ester link, wherein each segment is defined by the largest portion between two ester links and wherein the sum of the number of ether units and ester units is at least three, and wherein the at least one segment comprises an average number of ether links L between two adjacent ether units and an average number of ether units E, wherein a ratio R is defined according to formula (I) : L / ( E - 1) and wherein, when E is larger than 1.0, R is smaller than 1.0, and, when E is equal to 1.0, L is larger than 0.0; and

ii. at least one amine group ii. selected from a tertiary amine group, a salt of a tertiary amine group and a quaternary ammonium group,

and wherein each segment i. is covalently linked to the at least one amine group ii. via a linkage comprising a urethane group and another group selected from a urethane group, a urea group, a biuret group and an allophanate group.

The ether units (ia.) and ester units (ib.) of each segment are connected to one another by an ether link or an ester link. The ether unit (ia.) may be formed by a ring-opening polymerization reaction of a cyclic ether monomer, such as an oxirane monomer or an oxetane monomer. The ester unit (ib.) may be formed by a ring-opening polymerization reaction of a cyclic ester monomer, such as a lactone monomer, e.g. epsilon-caprolactone.

An ether link is defined as an oxy bond, i.e. -O-. An ether link may be formed between two adjacent ether units and may be formed between an ether unit and an ester unit at the hydroxyl end position of an ester monomer.

An ester link is defined as a carboxylate ester bond:

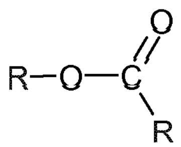

An ester link may be formed between two adjacent ester units and may be formed between an ether unit and an ester unit at the carboxylic acid end position of an ester monomer.

The at least one segment i. consists of at least one ether unit (ia.) and at least one ester unit (ib.), Each of the at least one segment i. has in total at least three units made up of the ether units ia. and the ester units ib. Thus, the average number of ether units E of the at least one segment is at least 1.0. In case E is equal to 1.0, L needs to be larger than 0.0. In case E is larger than 1.0, the ratio R according to formula (I) is smaller than 1.0.

The sequence of ether units and ester units in the segment is a basic aspect of the present invention. It is generally possible to provide corresponding block structures of either ether units or ester units on the one hand. On the other hand, it is possible to generate structures in which the structural units are more or less randomly copolymerized into the segment (such as random copolymer type). According to the present invention each segment provides sequences of ester units and ether units, wherein the average number of ether links L between two adjacent ether units and the ratio R are provided as a quantitative measure how randomly ester units and ether units are arranged in the segment.

The ratio R according to formula (I) is based on the understanding that an average number of ether links L, which is defined as ether links between two adjacent ether units, is related to the (statistical or non-statistical) chance of alternating an ether unit by an ester unit along the sequence. For example: in case the sequence is formed by a two-block structure of a polyether block and a polyester block, the average number of ether links between two adjacent ether units L will be equal to the sum of the average number of ether units E in the segment minus one ether unit (i.e. E - 1). Thus, for the two-block structure of a polyether block and a polyester block the formula (I) is equal to 1.0 as L is equal to (E - 1).

In case the segment has several sequences of ether units, which are interrupted by one or more ester units, the average number of ether links L between two adjacent ether units will accordingly decrease, while the average number of ether units E in the segment may be held constant. As a result, the ratio R is accordingly below 1.0.

$$\text{i.e. } R = L / ( E - 1) < 1.0$$

When the ratio R is smaller than 1.0, the amine functional compound provides enhanced properties, such as enhanced dispersion ability as dispersant. In particular, a dispersing stability provided by the amine functional compound at lower temperature may be improved as it shows less tendency towards crystallization. The enhanced properties of the amine functional compound may be an enhanced color, enhanced gloss and/or reduction of viscosity of the dispersion when using the amine functional compound as dispersant. Additionally, the handling of the amine functional compound in an additive composition is easier due to its low tendency towards crystallization.

Amine group ii.

In the invention, the amine functional compound comprises at least one amine group ii.

The at least one amine group ii. of the amine functional compound, which is suitably selected from a tertiary amine group, a salt of a tertiary amine group, and a quaternary ammonium group, provides functional groups for affinic binding to particles or fibers of a dispersion. Additionally, the at least one amine group ii. of the amine functional compound have, compared to primary amine groups and secondary amine groups, substantially no acceleration effect or at least a reduced effect on curing reactions of nucleophilic curable systems, such as epoxide systems.

Salt derivatives of tertiary amine and quaternary ammonium group

The salt formation products of the amine functional compounds according to the invention can be carried out, in analogy to the prior art of salt formation methods of tertiary amine groups, as are described in US2005/0250927, in particular in paragraphs [0078] - [0079], which are hereby incorporated by reference.

The amine functional compound may comprise a quaternary ammonium group. Said quaternary ammonium group may be obtained by a quaternization reaction of the tertiary amine group of the amine functional compound.

Suitable quaternization agents may be selected from alkyl halides and aralkyl halides, or epoxides, for example glycidyl ethers in the presence of acids. Typically, alkyl halides and aralkyl halides like benzyl chloride, 2- or 4-vinylbenzylchloride, methyl chloride or methyl iodide can be used. Moreover, tosylates like methyl tosylate can be used. Examples of suitable glycidyl ethers are alkyl glycidyl ethers like 2-ethylhexyl glycidyl ether and $C_{13}/C_{15}$-alkyl glycidyl ether or aryl glycidyl ethers like cresylglycidyl ether as well as glycidyl methacrylate. Examples for acids used in this quaternization reaction are carboxylic acids like benzoic acid, acetic acid or lactic acid. Further acids are phosphoric acid ester with one or two ester substituents. Preferred are benzyl chloride, 4-vinylbenzyl chloride and glycidyl methacrylate in combination with a carboxylic acid.

In a further embodiment, quaternization is carried out with a quaternization agent of formula (V)

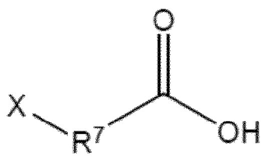

(V)

wherein X is a so-called leaving group, like halide, triflate or tosylate that can undergo a nucleophilic substitution reaction with a tertiary amine group; and $R^7$ is a linear or branched hydrocarbon group with 1 to 8 carbon atoms.

Preferred compounds of general formula (V) are monochloroacetic acid, derivatives of lactic acid, such as tosylated lactic acid, monochloropropionic acid, and higher homologous carboxylic acids substituted with a leaving group.

One or more types of quaternization agents may be used, either simultaneously or subsequently.

Linkage

Each segment i. is covalently linked to the at least one amine group ii. via a linkage comprising a urethane group and another group selected from a urethane group, a urea group, a biuret group and an allophanate group.

The linkage is formed due to coupling reactions of two isocyanate groups of a coupling agent. The coupling agent is one or more polyfunctional isocyanates. The isocyanate groups of the coupling agent may be available in an unblocked state.

In embodiments, the linkage is provided by one monomeric polyfunctional isocyanate, such as a monomeric diisocyanate compound. For example, the coupling agent is a diisocyanate compound, such as toluene diisocyanate hexamethylene diisocyanate and isophorone diisocyanate. In case a diisocyanate compound is used as coupling agent having unblocked isocyanate groups only, the linkage, which is formed due to the coupling reactions, comprises a urethane group and another group selected from a urethane group and a urea group.

Examples of compounds comprising at least two isocyanate groups are aliphatic, alicyclic, and aromatic polyisocyanates such as trimethylene diisocyanate, 1,2-propylene diisocyanate, tetramethylene diisocyanate, 2, 3-butylene diisocyanate, hexamethylene diisocyanate, octamethylene diisocyanate, 2,4-trimethyl hexamethylene diisocyanate, 2,4,4-trimethyl hexamethylene diisocyanate, dodecamethylene diisocyanate, $\alpha,\alpha'$-dipropyl ether diisocyanate, 1,3-cyclopentylene diisocyanate, 1,2-cyclohexylene diisocyanate, 1,4-cyclohexylene diisocyanate, 4-methyl-1,3-cyclohexylene diisocyanate, 4,4'-dicyclohexylene diisocyanate methane, 3, 3'-dimethyl-4,4'-dicyclohexylene diisocyanate methane, m-and p-phenylene diisocyanate, 1,3-and 1,4-bis(isocyanate methyl) benzene, 1,5-dimethyl-2, 4-bis(isocyanate methyl) benzene, 1,3,5-triisocyanate benzene, 2,4-and 2, 6-toluene diisocyanate, 2,4,6-toluene triisocyanate, $\alpha,\alpha,\alpha'$,

$\alpha$'-tetramethyl o-, m-, and p-xylylene diisocyanate, 4,4'-diphenylene diisocyanate methane, 4,4'-diphenylene diisocyanate, 3,3'-dichloro-4,4'-diphenylene diisocyanate, naphthalene-1,5-diisocyanate, isophorone diisocyanate, and transvinylidene diisocyanate and mixtures of the aforementioned polyisocyanates.

In alternative embodiments, the linkage is prepared using a coupling agent, which comprises a polyisocyanate structure composed of at least two monomeric polyfunctional isocyanates. The polyisocyanate structure may be a dimer structure composed of two monomeric polyfunctional isocyanates, may be a trimer structure composed of three monomeric polyfunctional isocyanates and may be an oligomer structure composed of more than three monomeric polyfunctional isocyanates.

In embodiments, the polyisocyanate structure may have at least one isocyanate group and may have at least at least one blocked isocyanate group. A known example of a polyfunctional isocyanate having at least one isocyanate group and a blocked isocyanate group is a polyfunctional isocyanate, which contains a uretdione group.

Compounds having polyisocyanate structures may be adducts of polyisocyanates, e.g., biurets, isocyanurates, allophonates, uretdiones, and mixtures thereof. Examples of such adducts are the adduct of two molecules of hexamethylene diisocyanate or isophorone diisocyanate and a diol such as ethylene glycol, the adduct of 3 molecules of hexamethylene diisocyanate and 1 molecule of water, the adduct of 1 molecule of trimethylol propane and 3 molecules of isophorone diisocyanate, the adduct of 1 molecule of pentaerythritol and 4 molecules of toluene diisocyanate, the isocyanurate of hexamethylene diisocyanate, available from Covestro under the trade designation "DESMODUR®" N3390, the uretdione of hexamethylene diisocyanate, available from Covestro under the trade designation "DESMODUR®" N3400, the allophonate of hexamethylene diisocyanate, available from Covestro under the trade designation "DESMODUR®" LS2101, and the isocyanurate of isophorone diisocyanate, available from Evonik under the trade designation "VESTANATE®" T1890. Furthermore, (co)polymers of isocyanate-functional monomers such as $\alpha,\alpha$'-dimethyl-m-isopropenyl benzyl isocyanate are suitable for use. Finally, the above-mentioned isocyanates and adducts thereof may be present in the form of blocked isocyanates as known to the skilled man.

In an exemplary embodiment, the coupling agent is a polyfunctional isocyanate, which contains at least one isocyanate group and at least one uretdione group. The (unblocked) isocyanate group forms a urethane group by reaction with a hydroxyl functional group of a segment according to the invention. Additionally, the uretdione group of the coupling agent is composed of two isocyanate groups, which are dimerized. The dimer structure of the uretdione groups provides a blocked state to the two isocyanate groups. The uretdione group may react with a reactive group, such as a primary amine group, a secondary amine group, or a hydroxyl group, of other compounds under suitable reaction conditions, thereby forming a biuret group or an allophanate group.

In case a polyfunctional isocyanate is used, which contains a uretdione group, as coupling agent, the linkage, which is formed, comprises a urethane group and another group selected from a biuret group and an allophanate group.

In further embodiments, the polyisocyanate structure may comprise a trimer or a higher oligomer of polyfunctional isocyanates. Said trimers and higher oligomers contain at least one isocyanurate ring. The polyisocyanate structure may contain one isocyanurate ring composed of three monomeric diisocyanates, may contain two isocyanurate rings composed of five or more monomeric diisocyanates, and may contain more than two isocyanurate rings. An example of a polyisocyanate structure having one isocyanurate ring is Desmodur IL polyisocyanate obtainable from Covestro.

In embodiments, the coupling agent is a polyfunctional isocyanate containing at least one isocyanurate ring and containing at least two isocyanate groups. In said embodiments, the linkage is formed by reacting two isocyanate groups of the polyfunctional isocyanate, wherein the formed linkage comprises at least one isocyanurate ring, a urethane group and another group selected from a urethane group and a urea group.

In embodiments, the coupling agent is a polyfunctional isocyanate containing a uretdione group. In said embodiment, the linkage is formed by using one or more polyfunctional isocyanates containing at least one uretdione group. In exemplary embodiments, the amine functional compounds are formed in an addition reaction by reacting:

a) one or more polyfunctional isocyanates containing uretdione groups with
b) one or more compounds having the formula (II)

$$Y - (OH)_n \qquad (II)$$

where OH is a hydroxyl group that is reactive towards isocyanates, n is an integer of at least 1, and
Y is a monomeric group or polymeric group that is a linear or branched chain, which is not reactive towards isocyanates and wherein at least one of the compounds having the formula (II) comprises a segment i. according to the invention, and with

c) one or more amine compounds of the formula (III)

Z- $(X\text{-}H)_m$ (III)

In which X is represented by O, NH and/or $NR^1$, and m = 1 - 100. Normally $R^1$ is independently selected and is represented by a chemical bond to a carbon atom of Z and/ or an independently selected organic group containing 1 - 20 carbon atoms, m is an integer of at least 1, and Z is an aliphatic, cycloaliphatic and/or aromatic basic radical, wherein Z contains at least one tertiary amine group.

Thus, the reactive group (X-H) is a hydroxyl group, a primary amine group or a secondary amine group. The amine compound c) of the formula (III) comprises at least one tertiary amine group.

The products of the reaction can also be used in the form of their salt formation products. In particular a salt from the tertiary amine group ii. can be used.

The urethane group of the linkage is formed due to the reaction of an isocyanate group of the one or more polyfunctional isocyanates a) with the hydroxyl group of the one or more compounds b) having the formula (II).

Additionally, due to the reaction of the uretdione group of the one or more polyfunctional isocyanates a) with the reactive groups of one or more amine compounds c) of the formula (III) at least one of a biuret group and an allophanate group is formed, depending on the reactive group (X-H) of the one or more amine compounds c).

For the preparation of the amine functional compounds according to the invention use can be made of the prior art polyfunctional isocyanates containing uretdione groups, as are described in US2005/0250927, in particular in paragraphs [0029] - [0031], which are hereby incorporated by references as exemplary embodiments of polyfunctional isocyanates a) according to the invention.

At least one of the compounds having the formula (II) comprise a segment i. according to the invention. Suitable compounds having the formula (II), which comprise a segment i. can be prepared according to methods as described herein. Additionally, prior art preparation methods for preparing segment i. having a random order of ether units and ester units are known.

For the preparation of the amine functional compounds according to the invention additional use can be made of prior art compounds having the formula (II), i.e. in addition to a compound having the formula (II) and comprising a segment i. according to the invention.

Suitable compounds having the formula (II), which do not have a segment i. are described in US2005/0250927, in particular in paragraphs [0033] - [0058], which are hereby incorporated by references as exemplary embodiments of compounds (II) according to the invention. Examples of suitable prior art compounds having the formula (II) are polyethers having at least one hydroxyl end group. These polyether compounds may be used, in combination of compounds (II) having a segment i. according to the invention, to prepare amine functional compounds according to the invention having desired compatibilities towards compositions.

The compounds having the formula (II) are non-crosslinking in case the compounds have only one hydroxyl group that is reactive towards isocyanates (i.e. $n = 1$). The compounds having the formula (II) are crosslinking compounds in case the compounds have more than one hydroxyl group that is reactive towards isocyanates (i.e. $n > 1$).

In preferred embodiments, the component c) is one or more amine compounds of the formula (IIIa)

Z- $(NHR)_m$ (IIIa)

In which R is hydrogen or a straight-chain or branched alkyl group having 1 to 4 carbon atoms, wherein Z and m are as defined above.

The primary amine - $NH_2$ and the secondary amine group -NHR provide enhanced reactivity towards the uretdione groups of the polyfunctional isocyanates a).

For the preparation of the amine functional compounds according to the invention use can be made of the prior art amine compounds of the formula (IIIa), as are described in US2005/0250927, in particular in paragraphs [0059] - [0075], which are hereby incorporated by references as exemplary embodiments of amine compounds c) according to the invention.

For preparing the addition compounds of the invention it is also possible to use mixtures of different starting materials such as mixtures of polyfunctional isocyanates and/or mixtures of compounds according to formula (II) and/or mixtures of compounds according to formula (III).

By varying the substituents of the formula (II), the portions and/or molecular weights thereof, it is possible to adjust the compatibility of the addition compounds of the invention in line with a very wide variety of solvents, carrier media, binders, resins, solids and, where appropriate, further polymeric compounds that are present in coating and moulding materials in which the addition compounds according to the invention are employed.

For use in highly polar systems such as water-based coating materials and electrocoats, for example, the radicals Y ought to include a sufficiently high fraction of polar groups, such as polyethylene oxides, for example, in order to achieve a level of water solubility which is sufficient for the particular area of use. This fraction of hydrophilic groups

ought also not to be too high, however, if in certain applications this results in an unwanted increase in the sensitivity to water.

In the case of use in apolar systems such as long-oil alkyd paints, PVC plastisols or polyolefins there should be an appropriate fraction of apolar groups, and in the case of use in systems where broad compatibility is important, such as pigment concentrates, for example, a balanced combination of polar and apolar groups is of advantage.

If the addition compounds are used, for example, in a polyurethane resin or in a coating material whose binder is a polyurethane it is advantageous to use those addition compounds of the invention whose molecule, by virtue of the groups present in the starting compounds of the formula (II), also includes urethane groups or similar groups which, as is known to the skilled person, are compatible with polyurethanes. The same applies, mutatis mutandis, to, for example, polyacrylates, polyesters, alkyd resins, etc.

Mutatis mutandis this also applies to the substituents of the formula (II), which exert particular influence over the affinity of the addition compounds of the invention for the solids used that are to be dispersed.

Segment units order of segment i.

In general, the more alternating the ether unit and the ester unit are arranged along the segment, the smaller the ratio R will be than 1.0 and closer the ratio R will be to 0.0. Typically, in case a mixture of segments is present in the amine functional compound, wherein in each segment the average number of ether units E is equal to one another (e.g. 4.0 ether units) and the number of ether links L between two adjacent ether units is statistically distributed in the segments (i.e. between 0.0 - 3.0 when using 4.0 ether units), the ratio R will be substantially equal to 0.5.

Ultimately, in case each of the segments has a perfect alternating sequence structure of ether units and ester units (e.g. ia. - ib. - ia. - ib-. sequence structure), the average number of ether links L between two adjacent ether units is equal to 0.0 (as no ether links L are present). Thus, the ratio R for the perfect alternating structure is equal to 0.0.

In an exemplary embodiment, the ratio R is smaller than 0.9, preferably R is smaller than 0.8, more preferably R is smaller than 0.7. The lower the ratio R, the more alternating the order of the ether units and the ester units is.

In an exemplary embodiment, the ratio R is substantially equal to 0.5. In this embodiment the ether units and ester units of the at least one segment are arranged in a random order. In case the ether units and ester units of the at least one segment are arranged in a random order, the ratio R will be substantially equal to 0.5. In case the molar ratio between the ether units and the ester units is equal to 1.0 : 1.0 and a chance of connecting an ester unit to an ether unit is substantially equal to the chance of connecting an ether unit to an ether unit during addition polymerization reaction of the segment, then the ratio R of the resulting segment is about 0.5. In particular, in this example a reaction rate for connecting an ester unit to an ether unit is substantially equal to a reaction rate for connecting an ether unit to an ether unit during addition polymerization reaction. In examples, by adjusting a molar ratio between the ether units and the ester units for the addition polymerization reaction of the segment, the ratio R of the segment may accordingly be tuned to be lower or higher than 0.5.

In an example, the ratio R is from 0.3 to 0.7, preferably the ratio R is from 0.4 to 0.6.

In an exemplary embodiment, the ratio R is substantially equal to 0.0. In this embodiment the ether units and the ester units of the at least one segment are arranged in a substantially alternating order. The ratio R is at least 0.0. In case molar ratio between the ether units and the ester units is 1 : 1 and the ether units and the ester units of the at least one segment are arranged in a perfect alternating order, the ratio R is equal to 0.0. Additionally, also in case an ether unit is always alternated by one or more ester units, independently of the molar ratio between the ether units and the ester units, the ratio R is equal to 0.0. In all of these embodiments, the number of ether links L between two adjacent ether units of the at least one segment is equal to 0.0.

In an example, the ratio R is from 0.0 to 0.1.

In an exemplary embodiment, the at least one segment has a molar ratio between the ester units and the ether units in the range 19 : 1 to 1 : 1. A higher amount of ester units provides a good compatibility of the amine functional compound to a dispersion system comprising particles. Moreover, the advantages of the invention become more apparent for segment structures with a higher amount of ester units and having the specific ratio R as defined by the formula (I). In particular, said segments may provide a reduced tendency towards crystallization of the segment of the amine functional compound. Preferably, the at least one segment has a molar ratio between the ester units and the ether units in the range 9 : 1 to 1 : 1.

The ether units ia.

In exemplary embodiments the ether units are selected from the group consisting of the formula (IV) $-[CR^{30}_2]_n-O-$, wherein n is an integer of 2 or 3, and $R^{30}$ independent of each other represent organic groups having 1 to 25 carbon atoms or hydrogen.

The organic group of $R^{30}$ may be a connective group $\sim R^{101}-CH_2-O\sim$ containing 1 - 25 carbons atoms, wherein

$R^{101}$ is independently selected and is an optional group represented by an organic group containing 1 - 25 carbon atoms,

In case $R^{30}$ is a connective group $\sim R^{101}$-$CH_2$-O~, the ether unit may have three links to other ester units and/ or ether units. In fact, the connective group provides the possibility of a third link to an ether unit or an ester unit additional to the two possible links of the ether unit at both ends of the ether unit according to formula (IV). For example the connective group $\sim R^{101}$-$CH_2$-O~ might be linked with another ether unit in order to form a structure element according to $\sim R^{101}$-$CH_2$-O--$[CR^{30}{}_2]_n$-O-.

In case n is equal to 2, the ether unit is generated by the polymerization of a corresponding epoxy functional monomer. Suitable types or species are for example: aliphatic, cycloaliphatic, aromatic and/or araliphatic glycidyl ether, glycidyl ester and olefin oxides like $C_1$-$C_{20}$- alkyl glycidyl ether, phenyl glycidyl ether, cresyl glycidyl ether, naphthyl glycidyl ether, butyl glycidyl ether, p-tert.-butyl-phenyl glycidyl ether, 2-ethyl-hexyl glycidyl ether, $C_{12}$-$C_{14}$-glycidyl ether, allyl glycidyl ether, 2,3-epoxypropylneodecanoate (Cardura® E 10, Resolution Performance Products), $C_4$-$C_{20}$-Olefine oxides like 1,2-octene oxide, 1,2-nonene oxide, 1,2-undecene oxide, 1,2-dodecene oxide, 1,2-octadecene oxide, 4-methyl-1,2-pentene oxide, 1,2 butene oxide, propene oxide, ethylene oxide, styrene oxide, butadiene monoxide, isoprene monoxide, cyclopentene oxide and/or 2-ethyl-1,2-butene oxide.

In the case the ether unit contains the connective group $\sim R^{101}$-$CH_2$-O~, this structural unit is derived from a corresponding epoxy functional monomer bearing at least one hydroxyl functional group, like for example glycidol.

In a particular embodiment, in case n is equal to 2, at least one of the $R^{30}$ represents an ether group having the formula $\sim R^{31}$-O-$R^{32}$, wherein $R^{31}$ and $R^{32}$ independent of each other represent organic groups having 1 to 30 carbon atoms. Suitable types or species are for example: aliphatic, cycloaliphatic, aromatic and/or araliphatic glycidyl ether, like $C_1$-$C_{20}$- alkyl glycidyl ether, phenyl glycidyl ether, cresyl glycidyl ether, naphthyl glycidyl ether, butyl glycidyl ether, p-tert.-butyl-phenyl glycidyl ether, 2-ethyl-hexyl glycidyl ether, $C_{12}$-$C_{14}$-glycidyl ether, allyl glycidyl ether. The ether units according to these embodiments further reduce a tendency towards crystallization of the segments.

In case n is equal to 3, the ether unit is generated by the polymerization of a corresponding oxetane-monomer. Suitable types or species are for example: non-substituted oxetane and its aliphatic, cycloaliphatic, aromatic and/or araliphatic derivatives like 3-ethyl-3-(phenoxymethyl) oxetane and, 3-ethyl-3-(2-ethylhexyloxymethyl)oxetane, 3,3-dipropyl oxetane, 3,3-diethyl oxetane, 3-ethyl-3-butyl oxetane, 3-butyl-3-methyl oxetane, 3-ethyl-3-methyl oxetane and ethylhexyl oxetane.

In the case the ether unit contains a connective group $\sim R^{101}$-$CH_2$-O~, this structural unit is derived from a corresponding oxetane functional monomer bearing at least one hydroxyl functional group, like for example 3-ethyl-3-(hydroxymethyl )oxetane, 3-methyl-3-(hydroxymethyl) oxetane and its derivatives obtained by ethoxylation or propoxylation with 1 - 10 ethylene oxide and/or propylene oxide, which can be arranged in a statistical-, block- or gradient-structure.

<u>The ester units ib.</u>

The ester units ib. may be formed by a ring opening polymerization reaction of a cyclic ester, such as propiolactone, valerolactone, butyrolactone, caprolactone, such as epsilon-caprolactone and delta-valerolactone. Epsilon-caprolactone is a readily available caprolactone, which may react both with itself and with cyclic ethers in a ring opening polymerization reaction. Said ester units ib. are readily obtainable in a random order arrangement in conjunction with ether units.

In a preferred embodiment, the segment i. is formed by a ring opening polymerization reaction of epsilon-caprolactone and a cyclic ether.

For preparing the segment i. it is also possible to use mixtures of cyclic esters and/ or mixtures of cyclic ethers.

In a further aspect of the invention a method is provided producing an amine functional compound according to the invention, comprising the steps of:

a) preparing a segment i. by reacting a cyclic ester and a cyclic ether together in a ring-opening polymerization reaction, wherein the ring-opening polymerization reaction is started by a polymerization starter compound, which comprises at least one functional group selected from a hydroxyl group, a primary amine group and a secondary amine group, and

b) converting the segment i. of step a) with a coupling agent to covalently link at least one amine group ii. to the segment.

The polymerization starter compound starts the ring-opening polymerization reaction of the cyclic ester and the cyclic ether, thereby forming the segment i.. The polymerization starter compound may be monofunctional, suitable for starting a formation of one segment, or may be multifunctional, suitable for starting the formation of at least two segments. After the formation of a segment i., the segment has at least one hydroxyl end group. The segment prepared in step a) may be linear and may be branched.

The segment i. prepared by step a) may have the formula (II) Y - $(OH)_n$, as described above, wherein Y represents the segment i. including the polymerization starter moiety. The segment i. prepared in step a) is an intermediate product. The polymerization starter compound may also be referred to as chain starter in the description of the invention.

In step b) the at least one amine group ii. is linked to the segment i. of step a) by an coupling agent. The coupling agent is a coupling agent, which provides a linkage between the segment i. and the at least one amine group ii. The linkage comprises a urethane group and another group selected from a urethane group, a urea group, a biuret group and an allophanate group.

During step b) the at least one terminal hydroxyl group of the segment i. is converted to a urethane group by reaction with an isocyanate group of the agent. In case the segment has one hydroxyl end group, one urethane group is formed. In case the segment has more than one hydroxyl end group, more than one urethane group may be formed during step b). An example is a branched segment, which has more than one hydroxyl end group.

In an exemplary embodiment, the coupling agent in step b) is one or more polyfunctional isocyanates containing a uretdione group and step b) comprises step b1) reacting said one or more polyfunctional isocyanates with the segment of step a) and step b2) reacting an amine compound comprising at least one tertiary amine group to covalently link the amine group ii. to the segment a).

Suitable amine compounds may comprises a reactive group selected from a hydroxyl group, a primary amine group and a secondary amine group. Said amine compounds have the formula (III), Z- $(X\text{-}H)_m$, as described above, in which X is represented by O, NH and/or $NR^1$, and m = 1 - 100. Normally $R^1$ is independently selected and is represented by a chemical bond to a carbon atom of Z and/ or an independently selected organic group containing 1 - 20 carbon atoms, m is an integer of at least 1, and Z is an aliphatic, cycloaliphatic and/or aromatic basic radical, wherein Z contains at least one tertiary amine group.

Preferably, the reactive group (X-H) is a primary amine group or a secondary amine group. In particular embodiments, the amine compounds have the formula (IIIa), Z- $(NHR)_m$, in which R is hydrogen or a straight-chain or branched alkyl group having 1 to 4 carbon atoms, wherein Z and m are as defined above.

Reaction conditions of step b)

The order of the reaction steps b1) and b2) can be suitably controlled according to the desired addition products.

In an exemplary embodiment, the reaction step b1) is performed before step b2) and step b2) comprises coupling the amine compound to the product of the reaction step b1). Preferably, the reaction of the free NCO groups of the polyisocyanates containing uretdione groups with compounds of the formula (II), wherein at least one or more compounds (II) comprise a segment i., is followed by the addition reaction of one or more amine compounds, e.g. of the formula (III), Z- $(X\text{-}H)_m$, by way of reaction of the reactive group (X-H) with the uretdione groups.

In an exemplary embodiment, the reaction step b1) and reaction step b2) are performed simultaneously (i.e. in a single reaction mixture).

The preparation of the addition compounds of the invention can be carried out, in analogy to the prior art, according to viscosity, in bulk or in the presence of suitable solvents, solvent mixtures or other suitable carrier media. Suitable solvents or carrier media are all those which are not reactive or whose reactivity towards the reactants is negligible and in which the reactants and the reaction products are at least partly soluble, examples being hydrocarbons such as toluene, xylene, aliphatic and/or cycloaliphatic benzine fractions, chlorinated hydrocarbons such as chloroform, trichloroethane, cyclic and acyclic ethers such as dioxane, tetrahydrofuran, polyalkylene glycol dialkyl ethers, esters such as ethyl acetate, butyl acetate, butyrolactone, phthalates or other plasticizers, di-or polycarboxylic esters, dialkyl esters of $C_2$ to $C_4$ dicarboxylic acids, referred to as "Dibasic Ester", alkyl glycol esters such as ethyl glycol acetate, methoxypropyl acetate, ketones such as methyl isobutyl ketone, cyclohexanone, acetone, acid amides such as dimethylformamide, N-methylpyrrolidone, and so on. The solvent or solvents and/or carrier media are advantageously selected to take account of the planned field of use. For example, for addition compounds of the invention for use in water-thinnable coating systems, or for coating pigments in aqueous suspension following the pigment synthesis, it is advantageous to use solvents which are totally or partly water-dilutable. Where the products are to be used, for example, in applications where the presence of VOCs (volatile organic compounds) is unwanted, the formulation should as far as possible be solvent-free or take place in appropriately high-boiling carrier media.

Depending on the field of application it is possible for the solvents used for the synthesis to remain in the reaction mixture, or they are fully or partly removed and, where appropriate, replaced by other solvents or carrier media. Depending on compatibility the addition compounds of the invention can also be combined with resins, resin solutions, reactive diluents, binders or other prior art additives, such as other wetting agents and dispersants, anti-settling agents, surface-active additives such as silicones, for example, and so on.

The solvent can be removed, for example, by distillation, where appropriate under reduced pressure, and/or azeotropically with the addition of water, such removal being complete or partial. Alternatively the active substance can be isolated by precipitation, by the addition of non-solvents such as aliphatic hydrocarbons, hexane for example, subsequent separation by filtration, and drying if desired. The active substance obtained by one of these methods can then be diluted in a solvent suitable for the particular field of application, or where appropriate can be used as it is, in the case of powder coating materials for example. If desired, following the addition of suitable high-boiling solvents, the solvent in which the addition product is dissolved can be distilled off, where appropriate under reduced pressure, and/or azeotropically with addition of water. In this way the addition product can be transferred to a carrier medium that is suitable for the respective field of application.

The reactions can be carried out in the presence of customary catalysts, examples being organotin compounds, such as dibutyltin dilaurate, other organometallic compounds such as iron acetylacetonate, tertiary amines such as triethylenediamine, enzymes or the like.

Reaction conditions of step a)

In an exemplary embodiment, in step a) the cyclic ester and the cyclic ether are added substantially simultaneously into a reaction mixture, which is maintained in reaction conditions. The preparing of a segment by reacting a cyclic ester and a cyclic ether together in a ring-opening polymerization reaction may be carried out such that the ether units and ester units of the segment are arranged in random order. In an embodiment, the cyclic ester and the cyclic ether may be mixed together before being brought into reaction conditions. In an example, a mixture of the cyclic ester and the cyclic ether may be controllably, e.g. dropwise, added to a reaction mixture such that the ether units and ester units of the segment are polymerized in random order.

In an exemplary embodiment, in step a) the polymerization starter compound is added to a reaction mixture containing the cyclic ester and the cyclic ether, which reaction mixture is maintained in reaction conditions. In this embodiment, step a) comprises forming a reaction mixture containing the cyclic ester and the cyclic ether, bringing the reaction mixture in reaction conditions, such as suitable temperature and suitable atmosphere for the addition reaction and adding the polymerization starter compound to the reaction mixture. A suitable atmosphere for reaction conditions may be an oxygen free atmosphere.

In an example, the polymerization starter compound is dropwise added in a liquid form to the reaction mixture. The polymerization starter compound may be dissolved in a solvent and the dissolved polymerization starter compound may be dropwise added to the reaction mixture.

Any catalyst that will promote the ring opening polymerization of the described monomers might be used. Representative catalysts include Bronstedt/Lewis acids ($CF_3SO_3CH_3/AlCl_3$, $BF_3$, $ZnCl_2$, rare earth triflates ($Sc(OTf)_3$), guanidines and amidines as for example (1,5,7-triazabicyclo[4.4.0]dec-5-ene (TBD), N-methyl-1,5,7-triazabicyclododecene (MTBD), and 1,8-diazabicyclo[5.4.0]undec-7-ene (DBU), phosphazenes, thiourea-amine, NH-carbenes and enzymes (H. Sardon, A. Pascual, D. Mecerreyes, D. Taton, H. Cramail, J. Hedrick, Macromolecules 2015, 48, 3153-3165).

Preferred catalyst types are catalysts, such as dual catalyst systems like $AlCl_3$/DBU, which provide similar reactivities of both the cyclic ester and the cyclic ether. (S. Naumann, P. Scholten, J. Wilson, A. Dove, J. Am. Chem. Soc. 2015, 137, 14439-14445).

The catalyst is used in catalytically significant amounts which depends on nature and quantities of reactants, temperature and mixing. Catalyst concentrations of 0.001 to 5 weight percent are typical, with a concentration of 0.01 to 2 weight percent preferred.

A semi batch production in which the more reactive monomer is added during the polymerization reaction might be a further possibility to generate relevant random polymers.

For the characterization of the both types of polymers - block types and random types - different analytical methods could be used for example elementary analysis, $^1$H NMR, $^{13}$C NMR, UV and IR spectroscopy, GPC and DSC. If the glass transition temperatures of the corresponding homopolymers (each based on one relevant monomer type) are sufficiently different, it is possible to distinguish between corresponding homo- and random polymers by means of DSC (differential scanning calorimetry) measurement. An exact description of the analytical methods to distinguish between block and random polymers are described in the literature (Polymere, Synthese, Eigenschaften und Anwendung, S. Koltzenburg, M. Maskos, O. Nuyken, Springer-Verlag Berlin Heidelberg, 2014, S. 397-399).

In a particular example, the characterization of the both types of polymers - block types and random types - may be performed by a method comprising the steps of: first hydrolyzing ester links of the at least one segment thereby obtaining sequences of the at least one segment which are free of ester groups . These sequences may have various sequence lengths composed of a number of ether links L between adjacent ether units and optionally including an ether link of an ester unit to an ether unit. The average number length of the sequences of ether units may be determined based on e.g. LC-MS techniques and/or GPC techniques. From these measurements, the average number of ether links L between adjacent ether units may be determined and an average number of ether units E may be determined.

Optionally, the average number of ether links L between adjacent ether units and/or the average number of ether units E may be determined using other techniques like for example with NMR.

In an exemplary embodiment, the molar ratio between the cyclic ester and the cyclic ether in step a) is in the

range 19 : 1 to 1 : 1. Preferably, the molar ratio between the ester units and the ether units in step a) is in the range 9 : 1 to 1 : 1.

In an exemplary embodiment, in step a) the cyclic ether comprises a hydroxyl group. In an example, the cyclic ether is a trimethylolpropane oxetane monomer, which has one hydroxyl group. The functional group of the cyclic ether may additionally react with another cyclic ether or cyclic ester to form an ether unit, which has at least three links to other units of the segment. In this way a branched segment is formed. The branched segment, which is prepared, has at least two hydroxyl end groups. Thus, the branched segment has a structure according to formula (II), Y - $(OH)_n$, where OH is a hydroxyl group that is reactive towards isocyanates, and n is an integer of at least 2.

In an exemplary embodiment, in step a) the polymerization starter compound is a multifunctional starter for starting at least two ring-opening polymerization reactions per molecule, wherein the at least one functional group of the polymerization starter compound comprises at least one of the group consisting of two hydroxyl groups, two secondary amine groups and a primary amine group. In this embodiment, the polymerization starter compound is multifunctional by starting the forming of at least two chains from the same polymerization starter compound. As such, the multifunctional polymerization starter compound enables that at least two segments are formed during step a) from the same polymerization starter compound.

In another aspect of the present invention a use is provided of an amine functional compound according to the present invention as dispersing agent.

In another aspect of the present invention a use is provided of an amine functional compound according to the present invention as wetting agent.

In another aspect of the present invention a composition is provided comprising particles and an amine functional compound according to the present invention.

The amine functional compound may be contained to function as dispersing agent and/or as wetting agent for the particles.

In an exemplary embodiment, the amount of amine functional compound in the composition is from 0.1 - 50.0 weight % based on total weight of the composition. Preferably, the amount of amine functional compound in the composition is from 0.1 - 10.0 weight % based on total weight of the composition. In particular, in case of using the amine functional compound as dispersing agent, said amount enhances the dispersion stability of the particles in the composition.

When using solids that are difficult to stabilize, the amount of wetting agent and dispersant according to the invention may be much higher. The concentration of dispersant needed depends in general on the specific surface area of the solid to be dispersed. Thus, for example, it may be important to know which pigment is involved. Generally, it can be stated that the stabilization of inorganic pigments generally requires less dispersant than is required for stabilizing organic pigments, as the latter tend to have a higher specific surface and therefore require a larger amount of dispersant. Typical doses of the wetting agent and dispersant for inorganic pigments are 1 to 30 wt. %, for organic pigments 10 to 50 wt. %, each based on the solid to be dispersed, in particular the pigment. In case of very finely divided pigments, for example, some carbon blacks, added amounts of 30 to 100 % or more are needed.

In an exemplary embodiment, the weight ratio between the particles and the amine functional compound in the composition is in the range 1 : 1 - 20 : 1. In particular, in case of using the amine functional compound as dispersing agent, said amount enhances the dispersion stability of the particles in the composition.

In an exemplary embodiment, the composition further comprises at least one organic binder. The organic binder may be any one resin based on polyurethane, cellulose nitrate, cellulose acetobutyrate, alkyd, melamine, polyester, chlorinated rubber, epoxide, and acrylate.

In another aspect of the present invention an amine functional compound is provided obtainable from a method for producing an amine functional compound according to the present invention, wherein the ether units and the ester units of said at least one segment i. are arranged in random order, and wherein the amine functional compound comprises at least one amine group ii. selected from a tertiary amine group, a salt of a tertiary amine group, and a quaternary ammonium group.

Application Examples

The amine functional compound of the invention is used in particular in known fields of use of dispersants, as for example in the production or processing of paints and varnishes, of printing inks, of paper coating, of leather colors and textile colors, of pastes, of pigment concentrates, of ceramics or of cosmetic preparations, and especially when these products include solids, such as pigments and/or fillers.

The amine functional compound of the invention can also be used in the production or processing of casting compounds and/or molding compounds based on synthetic, semisynthetic or natural macromolecular substances, such as polyvinyl chloride, saturated or unsaturated polyesters, polyurethanes, polystyrene, polyacrylate, polyamide, epoxy resins, polyolefins, such as polyethylene or polypropylene. Corresponding polymers can be used, for example, for

producing casting compounds, PVC plastisols, gelcoats, polymer concrete, printed circuit boards, industrial paints, wood and furniture varnishes, vehicle finishes, marine paints, anticorrosion paints, can coatings and coil coatings, decorating paints, and architectural paints. Examples of customary binders are resins based on polyurethane, cellulose nitrate, cellulose acetobutyrate, alkyd, melamine, polyester, chlorinated rubber, epoxide, and acrylate. Examples of water-based coatings are cathodic or anodic electrodeposition coating systems for automobile bodies, for example. Further examples are renders, silicate paints, emulsion paints, waterborne paints based on water-thinnable alkyds, alkyd emulsions, hybrid systems, 2-component systems, polyurethane dispersions and acrylate dispersions.

The amine functional compounds of the invention are especially suitable also as dispersants for producing solids concentrates, such as pigment concentrates. For this purpose, for example, the amine functional compounds are introduced in a carrier medium, such as organic solvents, plasticizers and/or water, and the solids for dispersal are added with stirring. These concentrates may additionally comprise binders and/or other auxiliaries. With the amine functional compound of the invention, however, it is possible in particular to produce stable, binder-free pigment concentrates. It is also possible with the polymers to produce flowable solids concentrates from pigment presscakes. In this case, the polymers of the invention are admixed to the presscake, which may still comprise organic solvents, plasticizers and/or water, and the resulting mixture is dispersed. The solids concentrates produced in various ways can then be incorporated into a variety of substrates, such as alkyd resins, polyester resins, acrylate resins, polyurethane resins or epoxy resins, for example. Pigments, however, can also be dispersed solventlessly without a solvent directly into the amine functional compound of the invention and are then suitable especially for pigmenting thermoplastic and thermoset plastic formulations.

The amine functional compound of the invention can also be used advantageously in the production of inks for "non impact" printing processes such as "themal inkjet" and the "bubble jet process". These inks may be, for example, aqueous ink formulations, solvent-based ink formulations, solvent-free or low-solvent inks for UV applications and waxlike inks.

The amine functional compound of the invention may also be used advantageously in the production of color filters for liquid-crystal displays. liquid-crystal screens, color resolution devices, sensors, plasma screens, displays based on SED (Surface conduction Electron emitter Display) and for MLCC (Multi Layer Ceramic Compounds). In this case the liquid color filter varnish, also called color resist, can be applied by any of a wide variety of application processes such as spin coating, knife coating, combination of the two or via "non-impact" printing processes such as inkjet processes, for example. The MLCC technology is used in the production of microchips and printed circuit boards.

The amine functional compound of the invention can also be used for producing cosmetic preparations such as, for example, makeup, powder, lipsticks, hair colorants, creams, nail varnishes, and sun protection products. These products may be present in the usual forms, such as W/O or O/W emulsions, solutions, gels, creams, lotions or sprays, for example. The polymers of the invention can be used advantageously in dispersions that are used for producing these preparations. These dispersions may comprise the carrier media that are customary in cosmetology for these purposes, such as water, castor oils or silicone oils and solids, examples being organic and inorganic pigments, such as titanium dioxide or iron oxide.

A dispersant of this kind may also be used, lastly, for producing a pigmented coating on a substrate, in which case the pigmented paint is applied to the substrate and the pigmented paint applied to the substrate is dried, baked or cured, or crosslinked.

The amine functional compound of the invention can be used alone or together with customary binders. In the case of use in polyolefins, it may be advantageous, for example, to use corresponding low molecular weight polyolefins as carrier materials together with an amine functional compound.

Another possible use of the amine functional compound of the invention lies in the production of dispersible solids in powder particle and/or fiber particle form, more particularly of dispersible pigments or polymeric fillers, in which case the particles are coated with an amine functional compound. Coatings of this kind of organic and inorganic solids are performed in a known way. The solvent or emulsion medium in this case may either be removed or may remain in the mixture, to form pastes. These pastes are customary commercial products and may additionally comprise binder fractions and also further auxiliaries and adjuvants. Especially in the case of pigments, the coating of the pigment surface may take place during or after the synthesis of the pigments, by addition of an amine functional compound the pigment suspension, for example, or during or after pigment conditioning. The pigments pretreated in this way are notable for greater ease of incorporation and for improved characteristics with respect to viscosity, flocculation, and gloss, and for greater color strength by comparison with untreated pigments.

Examples of pigments are mono-, di-, tri- and polyazo pigments, oxazine, dioxazine and thiazine pigments, diketopyrrolopyrroles, phthalocyanines, ultramarine and other metal complex pigments, indigoid pigments, diphenylmethane, triarylmethane, xanthenes, acridine, quinacridone, methine pigments, anthraquinone, pyranthrone, perylene and other polycyclic carbonyl pigments. Further examples of organic pigments are found in the following monograph: W. Herbst, K. Hunger "Industrial Organic Pigments", 1997 (publisher: Wiley-VCH, ISBN: 3-527-288368). Examples of inorganic pigments are pigments based on carbon black, graphite, zinc, titanium dioxide, zinc oxide, zinc sulfide, zinc

phosphate, barium sulfate, lithopone, iron oxide, ultramarine, manganese phosphate, cobalt aluminate, cobalt stannate, cobalt zincate, antimony oxide, antimonv sulfide, chromium oxide, zinc chromate, mixed metal oxides based on nickel, bismuth, vanadium, molybdenum, cadmium, titanium, zinc, manganese, cobalt, iron, chromium, antimony, magnesium, aluminum (examples being nickel titanium yellow, bismuth vanadate molybdate yellow, or chromium titanium yellow). Further examples are cited in the following monograph: G. Buxbaum, "Industrial Inorganic Pigments", 1998 (publisher: Wiley-VCH, ISBN: 3-527-28878-3). Inorganic pigments may also be magnetic pigments based on pure iron, iron oxides and chromium oxides or mixed oxides, metallic effect pigments composed of aluminum, zinc, copper or brass and pearlescent pigments, fluorescent and phosphorescent luminous pigments. Further examples are nanoscale organic or inorganic solids with particle sizes of below 100 nm, such as particular types of carbon black or particles consisting of a metal or a semimetal oxide and/or hydroxide and also particles which consist of mixed metal and/or semimetal oxides and/or hydroxides. For example, the oxides and/or oxide hydroxides of aluminum, of silicon, of zinc, of titanium, etc., can be employed for producing extremely finely divided solids of this kind. The process by which these oxidic and/or hydroxidic and/or oxide-hydroxidic particles are produced may take place via any of a wide variety of methods such as, for example, ion exchange operations, plasma operations, sol-gel processes, precipitation, comminution (by grinding, for example) or flame hydrolysis, etc. These nanoscale solids may also be what are called hybrid particles, consisting of an inorganic core and an organic shell or vice versa. Examples of fillers in powder or fiber form are, for example, those, which are constructed from particles in powder or fiber form of aluminum oxide, aluminum hydroxide, silicon dioxide, kieselguhr, siliceous earth, quartz. silica gel, talc, kaolin, mica, perlite, feldspar, finely ground slate, calcium sulfate, barium sulfate, calcium carbonate, calcite, dolomite, glass, polyvinylidene fluoride (PVDF) or carbon. Further examples of pigments or fillers are found, for example, in EP-A-0 270 126. Flame retardants as well, such as aluminum or magnesium hydroxide, and matting agents such as silicas, for example, are likewise amenable to effective dispersal and stabilization.

The amine functional compound of the invention, moreover, can also be used as emulsifier, phase mediator (liquid/liquid compatibilizer) or adhesion promoter.

The invention is elucidated in more detail below by means of working examples.

**Examples**

**General remarks**

In the case of substances without molecular uniformity the stated molecular weights-below as already in the foregoing description-represent average values of the numerical mean. The molecular weights or number-average molecular weights $M_n$, are determined, when titratable hydroxyl or amino groups are present, by end-group determination via the determination of the OH number or amine number, respectively. In the case of compounds to which an end-group determination cannot be applied, the number-average molecular weight is determined by means of gel permeation chromatography against a polystyrene standard. Unless otherwise remarked percentages are percentages by weight.

**Measurement of non-volatile components**

The sample (2.0 ± 0.1 g of the tested substance) was weighed in a previously dried aluminum crucible and dried in furnace for 20 minutes at 150 °C, cooled in a desiccator and then reweighed. The residue corresponds to the solids content in the sample (ISO 3251).

**Measurement of acid numbers**

The acid number is the KOH quantity in mg that is required for neutralizing 1 g of substance under the defined conditions. The acid numbers were determined by a neutralization reaction with a 0.1 N KOH in Ethanol according to DIN EN ISO 2114.

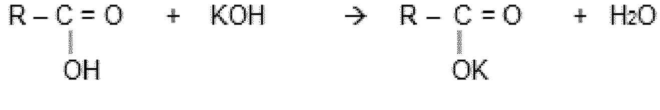

**Measurement of hydroxyl numbers**

The alcoholic hydroxyl groups were reacted by acetylation with an excess of acetic anhydride. The excess acetic anhydride was cracked into acetic acid by adding water and titrated back using ethanolic KOH. The hydroxyl number was understood to be the KOH quantity in mg, which is equivalent to the acetic acid quantity bound when

acetylating 1g of substance (according to DIN ISO 4629)

**Measurement of amine numbers**

Perchloric acid ($HClO_4$) in acetic acid has proved to be a suitable titration agent for organic bases containing nitrogen as well as primary, secondary and tertiary amine groups. Acid solvents such as acetic acid have stood the test in determining weak organic bases (good dissolving properties, proton-donating acid solvent). Additions of inert solvents such as cyclohexane, dioxane, chlorobenzene, acetone and methyl ethyl ketone can improve the titration of very weak bases (according to DIN 16945).

$$R - NH_2 + HClO_4 \rightarrow R - NH_3^+ + ClO_4^-$$

**Measurement of NCO values**

The free NCO content of the polyisocyanates employed and also the course of the NCO addition reactions, are determined in accordance with EN ISO 9369 by reaction with dibutylamine and subsequent titration of the amine excess.

**NMR measurements**

The NMR measurements were carried out on a Bruker DPX 300 at 300 MHZ ($^1H$) or 75 MHZ ($^{13}C$). Solvents used were deuterated chloroform ($CDCl_3$) and deuterated dimethyl sulfoxide (DMSO-de).

**Preparation of the intermediate products: first step**

Preparation method 1

A clean dry four-necked flask (500 ml) equipped with a condenser, KPG-stirrer thermostat and a nitrogen line was charged with a chain starter (which was dried in rotary evaporator at 100°C for 2 hours) and the catalyst and heated up to 80 °C. Additionally a mixture of the lactone and the epoxide was added so that the temperature did not exceed 85 °C. After complete addition the reaction mixture was stirred at that temperature until the epoxide was completely reacted (controlled by the means of NMR) and the content of non-volatile components was > 98 % (measurement of non-volatile components according to ISO 3251). After complete reaction the catalyst was neutralized with dibutylethanolamine (with 10 mol% excess of amine).

Table 1: Intermediate products prepared according to the method 1

| Example | chain starter | wt.% | lactone | wt.% | epoxide | wt.% | catalyst | wt.% |
|---|---|---|---|---|---|---|---|---|
| **M1** | hexadecanol | 20.43 | CAPA | 47.9 | EHGE | 31.56 | TFMSS | 0.05 |
| **M2** | MPEG 350 | 45.53 | CAPA | 29.83 | EHGE | 24.57 | TFMSS | 0.03 |
| **M3** | MPEG 500 | 45.74 | CAPA | 20.47 | EHGE | 33.72 | TFMSS | 0.03 |
| **M4** | 1-decanol | 7.59 | CAPA | 65.38 | EHGE | 26.92 | TFMSS | 0.05 |
| CAPA = ε-Caprolactone, 2-EHGE = 2-ethylhexyl glycidyl ether, TFMSS= trifluormethansulfonic acid<br>MPEG 350 = Methoxypolyethylene glycol, Mw=350 g/mol, MPEG 500 = Methoxypolyethylene glycol, Mw=500 g/mol | | | | | | | | |

**Preparation of comparative intermediate products: first step**

Preparation method 2

A clean dry four-necked flask (500 ml) equipped with a condenser, KPG-stirrer, thermostat and a nitrogen line was charged with a chain starter (which was dried in rotary evaporator at 100°C for 2 hours), the lactone and the catalyst and heated up to 160 °C. The reaction mixture was stirred at this temperature until the content of non-volatile components was > 98 % (measurement of non-volatile components according to ISO 3251).

Table 2: Intermediate products prepared according to the method 2

| Example | Chain starter | wt.% | lactone | wt.% | lactone | wt.% | catalyst | wt.% |
|---|---|---|---|---|---|---|---|---|
| **N1*** | hexadecanol | 21.04 | CAPA | 78.92 | - | - | DBTL | 0.004 |
| **N2*** | MPEG 350 | 50.42 | CAPA | 49.54 | - | - | DBTL | 0.004 |
| **N3*** | MPEG 500 | 59.81 | CAPA | 40.15 | - | - | DBTL | 0.004 |
| **N4*** | 1-decanol | 8.24 | CAPA | 70.97 | VALERO | 20.75 | DBTL | 0.004 |
| CAPA = ε-Caprolactone, MPEG 350 = Methoxypolyethylene glycol, Mw=350 g/mol, MPEG 500 = Methoxypolyethylene glycol, Mw=500 g/mol, DBTL= dibutyl tin dilaurate, VALERO = δ-Valerolacton | | | | | | | | |

**Preparation of the products: second step**

Preparation method 3

A clean dry four-necked flask (500 mL) equipped with condenser, KPG-stirrer, thermostat and a nitrogen line was charged with the isocyanate P3, the intermediate product (Example N2, N3, M2 or M3) and the (molten) polyether and homogenized. Then the catalyst (DBTL) was added and the mixture was heated up to 80 °C. The mixture was stirred at this temperature until the NCO value reached <0,1 % NCO (DIN EN ISO 9369). Then the amine compound was added and the mixture was heated up to 100 °C and stirred at this temperature until completed reaction of uretdione, which was controlled by the means of NMR.

Table 3: Products prepared according to the method 3

| Exampl e | isocyanat e | wt.% | Intermediat e | wt.% | polyeth er | wt.% | cataly st | wt.% | amin e | wt.% |
|---|---|---|---|---|---|---|---|---|---|---|
| **K3*** | P3 | 20.56 | N2* | 34.49 | MPEG 750 | 39.55 | DBTL | 0.004 | PEI 300 | 5.35 |
| **K4** | P3 | 19.67 | M2 | 34.31 | MPEG 750 | 40.86 | DBTL | 0.004 | PEI 300 | 5.12 |
| **K5*** | P3 | 17.75 | N3* | 40.72 | MPEG 750 | 36.87 | DBTL | 0.004 | PEI 300 | 4.62 |
| **K6** | P3 | 18.62 | M3 | 37.82 | MPEG 750 | 38.68 | DBTL | 0.004 | PEI 300 | 4.85 |

P3 = aliphatic hexamethylene diisocyanate (HDI) - Uretdione with a free NCO-value of 21.8% e.g. Desmodur® N3400 Covestro, PEI (number) = polyethyleneimine (molecular weight, MPEG 750 = Methoxypolyethylene glycol, Mw=750 g/mol, DBTL= dibutyl tin dilaurate

Preparation method 4

A clean dry four-necked flask (500 mL) equipped with condenser, KPG-stirrer, thermostat and a nitrogen line was charged with the isocyanate P4 and the stabilizer and heated up to 80 °C. Then the intermediate product (N4 or M4) was slowly added to the mixture. After complete addition, the reaction mixture was stirred until the NCO reaches the nominal value (DIN EN ISO 9369).

Then the amine was slowly added (exothermic) and the mixture was stirred at 80 °C until the NCO value reached <0,1 % NCO (DIN EN ISO 9369).

Table 4: Products prepared according to the method 4

| Example | isocyanate | wt.% | Intermediate | wt.% | Stabilizer | wt.% | amine | wt.% |
|---|---|---|---|---|---|---|---|---|
| **K7*** | P4 | 8.23 | N4* | 87.16 | benzoyl chloride | 0.048 | DMAPA | 4.57 |
| **K8** | P4 | 9.51 | M4 | 84.15 | benzoyl chloride | 0.048 | DMAPA | 6.29 |
| P4 = Toluenediisocyanate (TDI), DMAPA = Dimethylaminopropylamine | | | | | | | | |

**Application examples**

Samples marked with (*) are comparative examples.

APPLICATION EXAMPLE 1

During the application test additive K4 was compared with K3* and additive K6 with K5*. Samples prepared according to the invention (K4 and K6) are flowable, easy to handle and less crystalline as comparative examples (K3* and K5*), which showed high tendency to crystallization.

WORKING METHOD 1

**System**

Dispersion a solution of an universal grinding resin

Pigmented coating composition based on a clearcoat based on Thermoplastic Acrylate (TPA)

**Raw Material used for the application tests**

Laropal A81: (60% in Methoxy propyl acetate (PMA)) - Aldehyde grinding resin from BASF Paraloid B66: Thermoplastic Acrylate (TPA) from Dow Chemicals

Novoperm F3RK70: Very opaque organic pigment from Clariant

**Preparation of millbase**

Variation of parameters such as pigment/binder-ratio and additive dosage in the millbase formulation has a tremendous influence on the quality of the pigment dispersion and stabilization. The amount of resin may have an influence on flow behavior / viscosity, pigment wetting, storage stability of millbase and final paint for example. Only if there is an optimal amount of wetting & dispersing-additive available in the grinding phase the best pigment dispersion can be achieved. Consequently, for test purpose the system is adjusted by variation of W&D additives (see table 5).

Table 5: Formulation of the millbase

| **Mill base** (solids) | **K3*** (100%) | **K4** (100%) | **K5*** (100%) | **K6** (100%) |
|---|---|---|---|---|
| Laropal A81 (60%) | 13.5 | 13.5 | 13.5 | 13.5 |
| PMA | 12.4 | 12.4 | 12.4 | 12.4 |
| W&D-additive | 6.3 | 6.3 | 6.3 | 6.3 |
| Novoperm Red F3RK70 | 18.0 | 18.0 | 18.0 | 18.0 |
| | 50g | 50g | 50g | 50g |

(continued)

| **Mill base** (solids) | **K3*** (100%) | **K4** (100%) | **K5*** (100%) | **K6** (100%) |
|---|---|---|---|---|
| | | | | |
| Additive dosage (sop) | **35%** | **35%** | **35%** | **35%** |
| Pigment content | 36% | 36% | 36% | 36% |
| Pigment/binder ratio | **1 / 0.8** | **1 / 0.8** | **1/0.8** | **1 / 0.8** |

For the preparation of the millbase a binder, a wetting and dispersing additive (K3*, K4, K5* or K6) and a solvent were filled in a glass bottle (100 ml) and homogenized with a spatula. After this procedure the pigment and glass beads (1 mm) were added to the mixture and dispersed by high speed shaker (Disperser DAS A 200-K with cooling system - SYSTEM LAU) for 180 minutes at a maximum energy input. After that, the glass beads were removed by filtration (using 240 μm paper filter).

Table 6: Formulation of clearcoat

| **Clearcoat based on TPA** | |
|---|---|
| Paraloid B-66 (50% in Xylene) | 70.0 |
| DIDP | 2.0 |
| Xylene | 21.8 |
| PMA | 6.0 |
| BYK-306 | 0.2 |
| | 100.0 |

For the preparation of clearcoat Paraloid B-66 was dissolved in xylene. Then solvents (xylene, PMA), DIDP (Diisodecyl phthalate) and BYK-306 were slowly added to the mixture and mixed with dissolver (firma Getzmann) for 20 min.

A pigmented coating composition using a clearcoat based on thermoplastic acrylate (TPA) was formulated for each mill base (K3*, K4, K5* or K6) using the composition according to the table 7. Samples were applied on contrast charts using 100 μm spiralrackel.

Table 7: Pigmented coating composition based on millbases and TPA-clearcoat

| **Pigmented coating composition** | |
|---|---|
| TPA-Clearcoat | 15.0 |
| Millbase of Novoperm F3RK70 in Laropal A81(36% pigment) | 3.0 |
| | 18.0 |
| | |
| For pour-out diluted 1 : 1,5 with Xylene | |

**Gloss measurement**

Gloss (table 9) was measured with micro haze plus device from BYK.

**Evaluation of millbases in a TPA topcoat**

**Color comparison of paints with and without wetting and dispersing additive**

The state of dispersion of pigments (opaque and also transparent one's) can be judged by the color shift. The sample to be tested should be applied with low shear forces (pouring or draw down) and needs to be compared against a standard. A better dispersed pigment will change it's color "counter-clock-wise" based on the CIElab color space

compared to the control. The CIELAB color space (also known as CIE L*a*b* or sometimes abbreviated as simply "Lab" color space) is a color space defined by the International Commission on Illumination (CIE) in 1976.In a case of a red pigment this would be reflected by a positive shift along the b*-axis.

This test method works for all colored pigments, but not for white and black. The color measurement (L*, a*, b*-values) was done with a spectro-guide sphere (45/0) - BYK-Gardner. In the known CIElab color space, L* is always positive and represents brightness, a*>0 represents red component, a*<0 represents green component, b*>0 represents yellow component, b*<0 represents blue component.

**Results**

K4 and K6 improve the pigment dispersion and lead to better pigment stabilization in the TPA-system. This is reflected by the desired color shift. Compared to the comparative samples K3* and K5* the additives K4 and K6 led to a positive shift along the b*-axis (see Table 7) Furthermore the additives K4 and K6 show significantly improvement of gloss values and better surface appearance, see table 9.

Table 8: Meassurement of b* values.

| | **b*** |
|---|---|
| **K3*** | 60.53 |
| **K4** | 63.86 |
| **K5*** | 60.69 |
| **K6** | 63.47 |

Comparative examples K3* and K5* showed significantly lower b* values.

Table 9: Measurement of gloss (in units)

| angle (in°) | **K3*** | **K4** | **K5*** | **K6** |
|---|---|---|---|---|
| 20 | 3.2 | 27.3 | 3.5 | 14.7 |
| 60 | 29.5 | 73.9 | 29.1 | 66.1 |
| 85 | 79.5 | 90.9 | 72.9 | 92.0 |

APPLICATION EXAMPLE 2

Samples marked with (*) are comparative samples.

WORKING METHOD 2

During the application test additive K8 was compared with additive K7*

**System**

Solventborne TPA Topcoat

**Raw Material used for the application tests**

Paraloid B66 (50% in Xylene): thermoplastic acrylate from Dow Chemicals Company

CAB 551.01: Cellulose acetate butyrate from Eastman

Paliogen Maroon L3920: transparent organic pigment PR 179 (perylene) from BASF

**Preparation of millbase**

For the preparation of the millbase according to table 10 a binder, a wetting and dispersing additive and a solvent were filled in a glass bottle (100 ml) and homogenized with a spatula. After this procedure the pigment and glass

beads (1 mm) were added to the mixture and dispersed by high speed shaker (Disperser DAS A 200-K with cooling system - SYSTEM LAU) for 180 minutes at a maximum energy input. Subsequently the glass beads (1 mm) were removed by filtration (using 240 µm paper filter).

Table 10: Formulation of millbase

| **Millbase** (solids) | **K7*** (100%) | **K8** (100%) |
|---|---|---|
| Paraloid B66 (50% in Xylene) | 15.5 | 15.5 |
| n-Butanol | 5.0 | 5.0 |
| Butyl acetate/Xylene (1:1) | 22.0 | 22.0 |
| W&D-additive | 1.5 | 1.5 |
| Paliogen Marron L3920 | 6.0 | 6.0 |
| | 50g | 50g |
| | | |
| Additive dosage (sop) | **25%** | **25%** |
| Pigment content | 12% | 12% |
| Pigment/binder ratio | **1 / 2.5** | **1 / 2.5** |

**Millbase viscosity**

TPA systems are very fast drying systems, which lead to an enormous increase of viscosity of the millbase. As the dispersion process is the most expensive step during the paint manufacture, millbase viscosity is a decisive parameter for saving cost and energy. The better the dispersion of the pigments, the lower the attractive forces between the particles and consequently the lower the mill base viscosity and the more Newtonian is the flow behavior.

The viscosity was measured with Stresstech Rheometer, Reologica (1/10/100/500 1/s, cone/plate, 23°C).

**Results**

The measurement showed that the viscosity of the mill base prepared with additive K8 is much lower than the one prepared with the comparative sample K7*. The effect is clearly visible at low shear rate which reflects the reduced attraction between the particles due to the successful stabilization of the pigment by additive K8 (see Table 11).

Table 11: The viscosity of the mill base formulated using additives K8 and K7*

| share rate in [1/s] | **K7*** | **K8** |
|---|---|---|
| 1 | 3309 | 196 |
| 10 | 1650 | 134 |
| 100 | 302 | 78 |
| 500 | 64 | 8 |

**Claims**

**1.** An amine functional compound comprising:

i. at least one segment consisting of at least one ether unit and at least one ester unit, wherein the ether units and ester units are connected by an ether link or an ester link, and wherein the sum of the number of ether units and ester units is at least three, and wherein the ether units and ester units are arranged in random order, and

ii. at least one amine group ii. selected from a tertiary amine group, a salt of a tertiary amine group and a quaternary ammonium group,

and wherein each segment i. is covalently linked to the at least one amine group ii. via a linkage comprising a

urethane group and another group selected from a urethane group, a urea group, a biuret group and an allophanate group.

2. The amine functional compound according to claim 1, wherein each segment is defined by the largest portion between two ester links and wherein the sum of the number of ether units and ester units is at least three, and wherein the at least one segment comprises an average number of ether links L between two adjacent ether units and an average number of ether units E, wherein a ratio R is defined according to formula (I) : L / ( E - 1) and wherein E is larger than 1.0, and R is smaller than 1.0.

3. The amine functional compound according to claim 2, wherein the ratio R is smaller than 0.9, preferably R is smaller than 0.8, more preferably R is smaller than 0.7.

4. The amine functional compound according to anyone of the preceding claims 2 to 3, wherein the ratio R is substantially equal to 0.5.

5. The amine functional compound according to anyone of the preceding claims 2 to 3, wherein the ratio R is substantially equal to 0.0.

6. The amine functional compound according to anyone of the preceding claims, wherein the at least one (each) segment has a molar ratio between the ester units and the ether units in the range 19 : 1 to 1 : 1.

7. The amine functional compound according to anyone of the preceding claims, wherein the ether units are selected from the group consisting of the formula (IV) $-[CR^{30}{}_2]_n-O-$, wherein n is an integer of 2 or 3, and $R^{30}$ independent of each other represent organic groups having 1 to 25 carbon atoms or hydrogen.

8. The amine functional compound according to claim 7, wherein, in case n is equal to 2, at least one of the $R^{30}$ represents an ether group having the formula $-R^{31}-O-R^{32}$, wherein $R^{31}$ and $R^{32}$ independent of each other represent organic groups having 1 to 30 carbon atoms.

9. Use of an amine functional compound according to anyone of the preceding claims as dispersing agent.

10. Use of an amine functional compound according to anyone of the preceding claims 1 - 8 as wetting agent.

11. Composition comprising particles and an amine functional compound according to anyone of the preceding claims 1 - 8.

12. Method for producing an amine functional compound according to any one of the claims 1 - 8, comprising the steps of:

a) preparing a segment by reacting a cyclic ester and a cyclic ether together in a ring-opening polymerization reaction, wherein the ring-opening polymerization reaction is started by a polymerization starter compound, which comprises at least one functional group selected from a hydroxyl group, a primary amine group and a secondary amine group, and
b) converting the segment of step a) with a coupling agent to covalently link at least one amine group ii. to the segment.

13. The method according to claim 12, wherein the coupling agent is one or more polyfunctional isocyanates containing a uretdione group and step b) comprises step b1) reacting said one or more polyfunctional isocyanates with the segment of step a) and step b2) reacting an amine compound comprising at least one tertiary amine group to covalently link the amine group ii. to the segment a).

14. The method according to claim 13, wherein the amine compound comprises at least one reactive group selected from a primary amine group and a secondary amine group.

15. The method according to any one of the preceding claims 13 - 14, wherein the reaction step b1) is performed before step b2) and step b2) comprises coupling the amine compound to the product of the reaction step b1).

16. The method according to any one of the preceding claims 12 - 15, wherein in step a) the cyclic ester and the cyclic ether are added substantially simultaneously into a reaction mixture, which is maintained in reaction conditions.

17. The method according to any one of the preceding claims 12 - 15, wherein in step a) the polymerization starter compound is added to a reaction mixture containing the cyclic ester and the cyclic ether, which reaction mixture is maintained in reaction conditions.

## Patentansprüche

1. Aminfunktionelle Verbindung, umfassend:

   i. mindestens ein Segment, das aus mindestens einer Ethereinheit und mindestens einer Estereinheit besteht, wobei die Ethereinheiten und Estereinheiten über eine Etherbindung oder über eine Esterbindung verbunden sind und wobei die Summe der Zahl von Ethereinheiten und Estereinheiten mindestens drei beträgt und wobei die Ethereinheiten und Estereinheiten in statistischer Reihenfolge angeordnet sind, und
   ii. mindestens eine Amingruppe ii., die aus einer tertiären Amingruppe, einem Salz einer tertiären Amingruppe und einer quaternären Ammoniumgruppe ausgewählt ist,

   und wobei jedes Segment i. über eine Verknüpfung, die eine Urethangruppe und eine andere Gruppe, die aus einer Urethangruppe, einer Harnstoffgruppe, einer Biuretgruppe und einer Allophanatgruppe ausgewählt ist, umfasst, kovalent mit der mindestens einen Amingruppe ii. verknüpft ist.

2. Aminfunktionelle Verbindung nach Anspruch 1, wobei jedes Segment durch den größten Teil zwischen zwei Esterbindungen definiert ist und wobei die Summe der Zahl von Ethereinheiten und Estereinheiten mindestens drei beträgt und wobei das mindestens eine Segment eine durchschnittliche Zahl von Etherbindungen L zwischen zwei benachbarten Ethereinheiten und eine durchschnittliche Zahl von Ethereinheiten E aufweist, wobei ein Verhältnis R gemäß Formel (I): L / (E-1) definiert ist und wobei E größer als 1,0 ist und R kleiner als 1,0 ist.

3. Aminfunktionelle Verbindung nach Anspruch 2, wobei das Verhältnis R kleiner als 0,9 ist, vorzugsweise R kleiner als 0,8 ist, weiter bevorzugt R kleiner als 0,7 ist.

4. Aminfunktionelle Verbindung nach einem der vorhergehenden Ansprüche 2 bis 3, wobei das Verhältnis R weitgehend gleich 0,5 ist.

5. Aminfunktionelle Verbindung nach einem der vorhergehenden Ansprüche 2 bis 3, wobei das Verhältnis R weitgehend gleich 0,0 ist.

6. Aminfunktionelle Verbindung nach einem der vorhergehenden Ansprüche, wobei das mindestens eine Segment (jeweils) ein Molverhältnis zwischen den Estereinheiten und den Ethereinheiten im Bereich von 19:1 bis 1:1 aufweist.

7. Aminfunktionelle Verbindung nach einem der vorhergehenden Ansprüche, wobei die Ethereinheiten aus der Gruppe bestehend aus der Formel (IV) $-[CR^{30}_2]_n-O-$ausgewählt sind, wobei n für eine ganze Zahl mit einem Wert von 2 oder 3 steht und die Variablen $R^{30}$ unabhängig voneinander für organische Gruppen mit 1 bis 25 Kohlenstoffatomen oder Wasserstoff stehen.

8. Aminfunktionelle Verbindung nach Anspruch 7, wobei dann, wenn n gleich 2 ist, mindestens eine der Variablen $R^{30}$ für eine Ethergruppe der Formel $-R^{31}-O-R^{32}$ steht, wobei $R^{31}$ und $R^{32}$ unabhängig voneinander für organische Gruppen mit 1 bis 30 Kohlenstoffatomen stehen.

9. Verwendung einer aminfunktionellen Verbindung nach einem der vorhergehenden Ansprüche als Dispergiermittel.

10. Verwendung einer aminfunktionellen Verbindung nach einem der vorhergehenden Ansprüche 1-8 als Netzmittel.

11. Zusammensetzung, umfassend Teilchen und eine aminfunktionelle Verbindung nach einem der vorhergehenden Ansprüche 1-8.

12. Verfahren zur Herstellung einer aminfunktionellen Verbindung nach einem der Ansprüche 1-8, das folgende Schritte umfasst:

    a) Herstellen eines Segments durch Umsetzen eines cyclischen Esters und eines cyclischen Ethers in einer

Ringöffnungspolymerisationsreaktion, wobei die Ringöffnungspolymerisationsreaktion durch eine Polymerisationsstarterverbindung, die mindestens eine funktionelle Gruppe, die aus einer Hydroxylgruppe, einer primären Amingruppe und einer sekundären Amingruppe ausgewählt ist, gestartet wird, und
b) Umwandeln des Segments aus Schritt a) mit einem Kupplungsmittel zur kovalenten Verknüpfung mindestens einer Amingruppe ii. mit dem Segment.

**13.** Verfahren nach Anspruch 12, wobei es sich bei dem Kupplungsmittel um ein oder mehrere polyfunktionelle Isocyanate mit einer Uretdiongruppe handelt und Schritt b) Schritt b1), das Umsetzen des einen oder der mehreren polyfunktionellen Isocyanate mit dem Segment aus Schritt a), und Schritt b2), das Umsetzen einer Aminverbindung mit mindestens einer tertiären Amingruppe zur kovalenten Verknüpfung der Amingruppe ii. mit dem Segment a), umfasst.

**14.** Verfahren nach Anspruch 13, wobei die Aminverbindung mindestens eine reaktive Gruppe umfasst, die aus einer primären Amingruppe und einer sekundären Amingruppe ausgewählt ist.

**15.** Verfahren nach einem der vorhergehenden Ansprüche 13-14, wobei der Umsetzungsschritt b1) vor Schritt b2) durchgeführt wird und Schritt b2) das Kuppeln der Aminverbindung mit dem Produkt aus dem Umsetzungsschritt b1) umfasst.

**16.** Verfahren nach einem der vorhergehenden Ansprüche 12-15, wobei in Schritt a) der cyclische Ester und cyclische Ether weitgehend gleichzeitig in eine bei Reaktionsbedingungen gehaltene Reaktionsmischung gegeben werden.

**17.** Verfahren nach einem der vorhergehenden Ansprüche 12-15, wobei in Schritt a) die Polymerisationsstarterverbindung zu einer den cyclischen Ester und den cyclischen Ether enthaltenden Reaktionsmischung, die bei Reaktionsbedingungen gehalten wird, gegeben wird.

## Revendications

**1.** Composé fonctionnalisé par une amine, comprenant :

i. au moins un segment constitué d'au moins un motif éther et d'au moins un motif ester, les motifs éther et les motifs ester étant reliés par une liaison éther ou une liaison ester, et la somme du nombre de motifs éther et de motifs ester étant d'au moins trois, et les motifs éther et les motifs ester étant agencés en un ordre aléatoire, et
ii. au moins un groupe amine ii. choisi parmi un groupe amine tertiaire, un sel d'un groupe amine tertiaire et un groupe ammonium quaternaire,

et chaque segment i. étant lié de manière covalente à l'au moins un groupe amine ii. via une liaison comprenant un groupe uréthane et un autre groupe choisi parmi un groupe uréthane, un groupe urée, un groupe biuret et un groupe allophanate.

**2.** Composé fonctionnalisé par une amine selon la revendication 1, chaque segment étant défini par la plus grande portion entre deux liaisons ester et la somme du nombre de motifs éther et de motifs ester étant d'au moins trois, et l'au moins un segment comprenant un nombre moyen de liaisons éther L entre deux motifs éther adjacents et un nombre moyen de motifs éther E, un rapport R étant défini selon la formule (I) : L/(E - 1) et E étant plus grand que 1,0, et R étant plus petit que 1,0.

**3.** Composé fonctionnalisé par une amine selon la revendication 2, le rapport R étant plus petit que 0,9, préférablement R étant plus petit que 0,8, plus préférablement R étant plus petit que 0,7.

**4.** Composé fonctionnalisé par une amine selon l'une quelconque des revendications précédentes 2 à 3, le rapport R étant sensiblement égal à 0,5.

**5.** Composé fonctionnalisé par une amine selon l'une quelconque des revendications précédentes 2 à 3, le rapport R étant sensiblement égal à 0,0.

**6.** Composé fonctionnalisé par une amine selon l'une quelconque des revendications précédentes, l'au moins un (chaque) segment possédant un rapport molaire entre les motifs ester et les motifs éther dans la plage de 19 : 1 à 1 : 1.

7. Composé fonctionnalisé par une amine selon l'une quelconque des revendications précédentes, les motifs éther étant choisis dans le groupe constitué par la formule (IV)-$[CR^{30}{}_2]_n$-O-, n étant un entier de 2 ou 3, et $R^{30}$ indépendamment l'un de l'autre représentant des groupes organiques possédant 1 à 25 atomes de carbone, ou hydrogène.

8. Composé fonctionnalisé par une amine selon la revendication 7, dans lequel, au cas où n est égal à 2, au moins l'un des $R^{30}$ représente un groupe éther possédant la formule -$R^{31}$-O-$R^{32}$, $R^{31}$ et $R^{32}$ indépendamment l'un de l'autre représentant des groupes organiques possédant 1 à 30 atomes de carbone.

9. Utilisation d'un composé fonctionnalisé par une amine selon l'une quelconque des revendications précédentes en tant qu'agent dispersant.

10. Utilisation d'un composé fonctionnalisé par une amine selon l'une quelconque des revendications précédentes 1 à 8 en tant qu'agent mouillant.

11. Composition comprenant des particules et un composé fonctionnalisé par une amine selon l'une quelconque des revendications précédentes 1 à 8.

12. Procédé pour la production d'un composé fonctionnalisé par une amine selon l'une quelconque des revendications précédentes 1 à 8, comprenant les étapes de :

a) préparation d'un segment par mise en réaction d'un ester cyclique et d'un éther cyclique ensemble dans une réaction de polymérisation par ouverture de cycle, la réaction de polymérisation par ouverture de cycle étant démarrée par un composé de démarrage de polymérisation, qui comprend au moins un groupe fonctionnel choisi parmi un groupe hydroxyle, un groupe amine primaire et un groupe amine secondaire, et
b) conversion du segment de l'étape a) avec un agent de couplage pour lier de manière covalente au moins un groupe amine ii. au segment.

13. Procédé selon la revendication 12, l'agent de couplage étant un ou plusieurs isocyanates polyfonctionnels contenant un groupe uretdione et l'étape b) comprenant l'étape b1) de mise en réaction dudit ou desdits isocyanates polyfonctionnels avec le segment de l'étape a) et l'étape b2) de mise en réaction d'un composé de type amine comprenant au moins un groupe amine tertiaire pour lier de manière covalente le groupe amine ii. au segment a).

14. Procédé selon la revendication 13, le composé de type amine comprenant au moins un groupe réactif choisi parmi un groupe amine primaire et un groupe amine secondaire.

15. Procédé selon l'une quelconque des revendications précédentes 13 et 14, l'étape de réaction b1) étant réalisée avant l'étape b2) et l'étape b2) comprenant le couplage du composé de type amine au produit de l'étape de réaction b1).

16. Procédé selon l'une quelconque des revendications précédentes 12 à 15, dans lequel dans l'étape a) l'ester cyclique et l'éther cyclique sont ajoutés sensiblement simultanément dans un mélange réactionnel, qui est maintenu dans des conditions de réaction.

17. Procédé selon l'une quelconque des revendications précédentes 12 à 15, dans lequel dans l'étape a) le composé de démarrage de polymérisation est ajouté à un mélange réactionnel contenant l'ester cyclique et l'éther cyclique, lequel mélange réactionnel est maintenu dans des conditions de réaction.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20170190840 A
- US 20050250927 A
- EP 0270126 A

### Non-patent literature cited in the description


- **H. SARDON ; A. PASCUAL ; D. MECERREYES ; D. TATON ; H. CRAMAIL ; J. HEDRICK.** *Macromolecules,* 2015, vol. 48, 3153-3165
- **S. NAUMANN ; P. SCHOLTEN ; J. WILSON ; A. DOVE.** *J. Am. Chem. Soc.,* 2015, vol. 137, 14439-14445
- **S. KOLTZENBURG ; M. MASKOS ; O. NUYKEN.** Polymere, Synthese, Eigenschaften und Anwendung. Springer-Verlag, 2014, 397-399
- **W. HERBST ; K. HUNGE.** Industrial Organic Pigments. Wiley-VCH, 1997
- **G. BUXBAUM.** Industrial Inorganic Pigments. Wiley-VCH, 1998